(19) Europäisches Patentamt
European Patent Office
Office européen des brevets

(11) EP 1 201 959 A2

(12) **EUROPÄISCHE PATENTANMELDUNG**

(43) Veröffentlichungstag:
   02.05.2002 Patentblatt 2002/18

(51) Int Cl.⁷: **F16F 7/10**

(21) Anmeldenummer: 01125025.5

(22) Anmeldetag: 20.10.2001

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **26.10.2000 DE 10053114**

(71) Anmelder: **ROBERT BOSCH GMBH
   70442 Stuttgart (DE)**

(72) Erfinder:
   • **Wu, Datong
     75181 Pforzheim (DE)**
   • **Bendel, Karl
     71701 Schwieberdingen (DE)**
   • **Zimmermann, Hans-Werner
     73274 Notzingen (DE)**

(54) **Vorrichtung zum Dämpfen der Schwingung eines schwingfähig gelagerten Aggregats**

(57) Bei einer Vorrichtung zum Dämpfen der Schwingung eines schwingfähig gelagerten Aggregats (10) mit einem an das Aggregat (109 angekoppelten, von einem in Gegenphase zum Aggregat (10) schwingenden, von einem Feder-Masse-System (17, 16) gebildeten, passiven Schwingungstilger (15) ist zur preiswerten Realisierung einer Dämpfungsvorrichtung, die die Schwingung des Aggregats (10) vollständig kompensiert, eine auf die Masse (16) des Schwingungstilgers (15) in Schwingungsrichtung wirkende Antriebsvorrichtung (18) vorgesehen, die phasenrichtig so gesteuert ist, daß die Schwingungsamplitude des Schwingungstilgers (15) um einen zur vollständigen Kompensierung der Schwingung des Aggregats (10) erforderlichen Betrag erhöht wird (Fig.1).

Fig.1

**Beschreibung**

Stand der Technik

Die Erfindung geht aus von einer Vorrichtung zum Dämpfen der Schwingung eines schwingfähig gelagerten Aggregats nach dem Oberbegriff des Anspruchs 1.

Bei zahlreichen Aggregaten mit rotierenden oder oszillierenden Teilen treten Schwingungen mit konstanter Frequenz auf. Durch eine geeignete Lagerung oder Aufhängung dieser Aggregate kann die Übertragung der Schwingungen auf die Umgebung gemindert werden.

Die Schwingungen solcher Aggregate werden üblicherweise mit Dämpfungsvorrichtungen, die sog. passive oder aktive Schwingungstilger oder Schwingungsausgleicher aufweisen, minimiert. Die außen am Aggregat angekoppelten passiven Schwingungstilger sind als Feder-Masse-System konzipiert, deren Eigen- oder Resonanzfrequenz auf eine Frequenz abgestimmt ist, mit der das Aggregat angeregt wird. Das Feder-Masse-System schwingt in Gegenphase zum Aggregat, wodurch dessen Schwingung minimiert wird. Allerdings läßt sich die Aggregateschwingung nicht auf Null reduzieren, da eine von der Güte des passiven Schwingungstilgers abhängige Schwingungsamplitude zur Anregung des Schwingungstilgers notwendig ist.

Für Anwendung in Gebäuden in erdbebenbedrohten Gebieten sind aktive Schwingungstilger bekannt, mit denen die bei Erdbeben oder starken Winden auftretenden Schwankungen und Schwingungen kompensiert werden sollen und hierzu Hilfsmassen direkt antreiben werden. Aktive Schwingungstilger mit gesteuerten Aktuatoren finden sich auch im Kraftfahrzeugbau (vgl. hierzu Banfo, Dehandschutter, und Schmidetzki "Active Control of Rolling Noise in a Passenger Car ...", International Journal of Active Control, Vol. 1 No. 4, 1995).

Vorteile der Erfindung

Die erfindungsgemäße Vorrichtung zum Dämpfen der Schwingung eines schwingfähig gelagerten Aggregats hat den Vorteil, daß durch den passiven Schwingungstilger oder passiven Gegenschwinger, dessen Resonanzfrequenz auf die wesentliche Anregungsfrequenz des Aggregats abgestimmt ist, bereits der größte Teil (ca. 90%) der Schwingung des Aggregats kompensiert wird und durch die Antriebsvorrichtung nur noch ein kleiner Beitrag geleistet wird, der die Amplitude der Aggregatschwingung vollständig zu Null macht. Zwar wirkt die erfindungsgemäße Dämpfungsvorrichtung nur monofrequent, doch wird im Gegensatz zur Verwendung eines aktiven Schwingungstilgers, der breitbandig wirkt, eine kostengünstige Lösung gewonnen, die einerseits nur geringe Herstellkosten und andererseits nur wenig Energie für die Antriebsvorrichtung erfordert. Durch die erfindungsgemäße Realisierung eines passiven Schwingungstilgers mit einer aktiven Funktion kann darüber hinaus die Masse des Schwingungstilgers im Vergleich zu bekannten passiven Schwingungstilgern klein gehalten werden. Die dann erforderliche größere Anregungskraft für die Masse zur Erzeugung einer gleichen Schwingungsamplitude wird durch die Antriebsvorrichtung erzeugt.

Durch die in den weiteren Ansprüchen aufgeführten Maßnahmen sind vorteilhafte Weiterbildungen und Verbesserungen der im Anspruch 1 angegebenen Dämpfungsvorrichtung möglich.

Gemäß einer vorteilhaften Ausführungsform der Erfindung weist die Antriebsvorrichtung einen elektromagnetischen Antrieb und eine Steuereinheit zum Steuern des Antriebs auf. Dabei ist zur Realisierung eines fertigungskostengünstigen Antriebs eine elektrische Spule vorgesehen, die von einer Steuereinheit mit Stromimpulsen gleicher Polarität phasenrichtig beaufschlagt wird, so daß die Spule nur während einer Halbpperiode der Schwingung des Schwingungstilgers bestromt ist. Dabei kann alternativ die elektrische Spule zwischen der Masse des Schwingungstilgers und dem Aggregat angeordnet und auf mindestens einer der einander zugekehrten Oberfläche von Aggregat und Masse ferromagnetisches Material angebracht werden, oder die Masse des Schwingungstilgers mit einem Eisenkern starr verbunden werden, der in die hohlzylindrisch ausgebildete Spule eintaucht.

Gemäß einer vorteilhaften Ausführungsform der Erfindung wird zur Generierung der Steuersignale für den Antrieb der Steuereinheit ein elektrisches Referenzsignal zugeführt, das mit der Schwingung des Aggregats synchronisiert ist. Vorzugsweise wird dabei das Referenzsignal von einer die Schwingung des Aggregats auslösenden, elektrischen Anregungsspannung abgeleitet, wie z.B. von der Antriebsspannung bei Synchronmotoren oder den Zündimpulsen bei Verbrennungsmotoren, etc. Ist das Aggregat beispielsweise ein Stirlingmotor mit netzgekoppelter Linearmaschine, wird das Referenzsignal direkt von der induzierten Wechselspannung der Linearmaschine abgenommen. Das 50 Hz-Referenzsignal wird in der Steuereinheit mittels eines Phasenschiebers phasenrichtig eingestellt, mittels eines steuerbaren Verstärkers in der Amplitude eingestellt und mittels eines im Stromkreis zwischen Steuereinheit und Spule angeordneten elektrischen Schalters, z.B. Diode, auf eine halbe Schwingungsperiode des Referenzsignals beschränkt.

Zeichnung

Die Erfindung ist anhand von in der Zeichnung dargestellten Ausführungsbeispielen in der nachfolgenden Beschreibung näher erläutert. Es zeigen in schematischer Darstellung

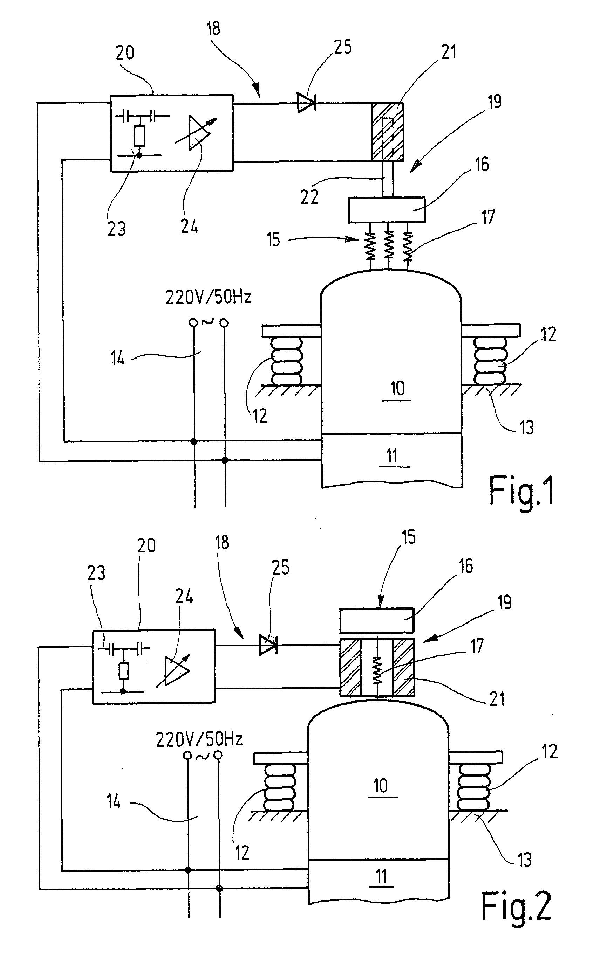

Fig. 1 und 2  jeweils einen Stirlingmotor mit netzgekoppelter Linearmaschine und einer Vorrichtung zur Schwingungsdämpfung gemäß einem ersten und zweiten Ausführungsbeispiel.

Beschreibung der Ausführungsbeispiele

In den in Fig. 1 und 2 schematisiert skizzierten Ausführungsbeispielen einer Dämpfungsvorrichtung zum Dämpfen der Schwingung eines schwingfähig gelagerten Aggregats wird das Aggregat von einem Stirlingmotor 10 mit netzgekoppelter Linearmaschine 11 gebildet, der über Gummipuffer 12 auf einem Fundament 13 schwingfähig gelagert ist. Aufbau und Wirkungsweise eines Stirlingmotors 10 sind bekannt und beispielsweise in Bosch "Kraftfahrtechnisches Taschenbuch, 23. Auflage, 1999, Seite 242 ff." beschrieben. Ein Beispiel für die von den Stirlingmotor 10 angetriebene Linearmaschine 11 findet sich in US 5 654 596. Die Linearmaschine 11 oder der Lineargenerator ist an einem 50 Hz-Wechselspannungsnetz angeschlossen. Der Stirlingmotor 10 mit netzgekoppeltem Betrieb schwingt fest bei 50 Hz, wobei der Phasenwinkel zwischen der linearen Kolbenbewegung des Stirlingmotors 10 und der induzierten Spannung der Linearmaschine 11 konstant und unabhängig von der Leistung des Stirlingmotors 10 ist. Die hin- und hergehenden Kolben des Stirlingmotors 10 erzeugen eine Schwingung, die über die Gummipuffer 12, die ein gedämpftes Federsystem darstellen, auf das Fundament 13 übertragen werden. Um diese Schwingungsübertragung weitgehend zu unterdrücken ist an den Stirlingmotor 10 eine Dämpfungsvorrichtung angekoppelt.

Der wesentliche Bestandteil der Dämpfungsvorrichtung ist ein passiver Schwingungstilger 15, auch Schwingungsausgleicher oder Gegenschwinger genannt, der aus einem in Gegenphase zum Stirlingmotor 10 schwingenden Feder-Masse-System besteht, wobei die Masse 16 über eine Feder 17 oder mehrere parallel geschaltete Federn 17 an das Gehäuse 101 des Stirlingmotors 10 angekoppelt ist. Die Resonanzfrequenz des passiven Schwingungstilgers 15, die sich gemäß

$$f = \frac{1}{2\pi} \cdot \sqrt{\frac{c}{m}},$$

berechnet, wobei c die resultierende Federkonstante der Federn 17 und m die Masse der Masse 16 ist, wird auf die Anregungsfrequenz des netzgekoppelten Stirlingmotors 10 , also auf 50 Hz, abgestimmt. Der Schwingungstilger 15 schwingt in Gegenphase zum Stirlingmotor 10 und reduziert weitgehend dessen Schwingung. Da jedoch eine von der Dämpfung bzw. Güte des Schwingungstilgers 15 abhängige Schwingungsamplitude zur Anregung des Schwingungstilgers 15 notwendig ist, verbleibt eine Restschwingung, die mit Hilfe einer auf die Masse 16 des Schwingungstilgers 15 in Schwingungsrichtung wirkenden Antriebsvorrichtung 18 zu Null gemacht wird.

Die Antriebsvorrichtung 18 weist einen elektromagnetischen Antrieb 19 und eine den elektromagnetischen Antrieb 19 steuernde Steuereinheit 20 auf. Der elektromagnetische Antrieb 19 besteht in dem Ausführungsbeispiel der Fig. 1 aus einer elektrischen Spule 21, die hohlzylindrisch ausgebildet ist, und einem in die Spule 21 eintauchenden Eisenkern 22, der starr mit der Masse 16 verbunden ist. Der elektromagnetische Antrieb 19 im Ausführungsbeispiel der Fig. 2 umfaßt wiederum eine elektrische Spule 21, die zwischen der Masse 16 und dem Gehäuse 101 angeordnet ist. Zusätzlich muß an der Oberfläche des Gehäuses 101 oder an der dieser zugekehrten Oberfläche der Masse 16 oder an beiden ferromagnetisches Material, vorzugsweise Eisen, vorhanden sein. Alternativ kann die Masse 16 aus Eisen bestehen. Die Steuereinheit 20 ist so ausgebildet, daß sie die elektrische Spule 21 mit Stromimpulsen gleicher Polarität phasenrichtig so beaufschlagt, daß in jeder halben Schwingungsperiode des Schwingungstilgers 15 eine Kraft zwischen Gehäuse 101 und Masse 16 aufgebaut wird, die die Masse 16 zum Gehäuse 101 hin oder vom Gehäuse 101 weg antreibt. Im Ausführungsbeispiel der Fig. 2 zieht diese Kraft die Masse 16 gegen das Gehäuse 101 des Stirlingmotors 10, im Ausführungsbeispiel der Fig. 1 bewirkt die Kraft ein stärkeres Eintauchen des Eisenkerns 22 in die Spule 21, wobei der dadurch entstehende Hub des Schwingungstilgers 15 über die Amplitude der Stromimpulse einstellbar ist. Auf diese Weise wird die Schwingungsamplitude des Schwingungstilgers 15 bei jeder halben Schwingungsperiode um einen Betrag erhöht, der zur vollständigen Kompensierung der Schwingung des Stirlingmotors 10 führt.

Zur Generierung der Stromimpulse für den Antrieb 19 ist der Steuereinheit 20 ein Referenzsignal zugeführt, das mit der Anregungsfrequenz des Aggregats synchronisiert ist. Im Ausführungsbeispiel des netzgekoppelten Stirlingmotors 10 wird hierzu das Referenzsignal von der induzierten Spannung der Linearmaschine 11 abgenommen und entspricht der 50 Hz-Wechselspannung. Die Steuereinheit 20 leitet aus diesem Referenzsignal mit der Schwingung des Stirlingmotors 10 phasenstarre Stromimpulse ab, die im Gegentakt zur Schwingung des Stirlingmotors 10 während einer Halbperiode dieser Schwingung der Spule 21 zugeführt werden. Hierzu weist die Steuereinheit 20 einen Phasenschieber 23 und einen steuerbaren Verstärker 24 auf, mit denen der genaue Phasenwinkel und die Amplitude der Stromimpulse eingestellt werden. Ein im Stromkreis zwischen der Steuereinheit 20 und der Spule 21 angeordnete Diode 25 läßt aus dem periodischen, phasenverschobenen, amplitudengesteuerten Referenzsignal nur die Halbschwingungen gleicher Polarität als Stromimpulse an die Spule 21 gelangen. Anstelle der Diode 25 kann jeder elektrische Schalter verwendet werden. Der Phasenschieber 23 kann beispielsweise als RC-Kette ausgeführt werden.

Die Erfindung ist nicht auf die vorstehend beschriebenen Ausführungsbeispiele beschränkt. So kann anstelle des Stirlingmotors 10 jedes beliebige, schwingfähig gelagerte Aggregat oder Gerät in Verbindung mit der erfindungsgemäßen Dämpfungsvorrichtung verwendet werden.

Das mit der Schwingung des Aggregats synchrone elektrische Referenzsignal, das der Steuereinheit zugeführt wird, wird dann mittels eines Sensors aufgenommen. Auch kann das Referenzsignal aus elektrischen Anregungsspannungen des Aggregats abgeleitet werden, z.B. bei Synchronmotoren aus der Antriebsspannung und bei Verbrennungsmotoren aus dem Zündimpuls. Die Steuereinheit 20 ist dann in ihrem Aufbau so zu modifizieren, daß wiederum die Spule 21 während einer halben Schwingungsperiode des Aggregats bzw. der halben Schwingungsperiode der Gegenschwingung des Schwingungstilgers 15 mit einem Stromimpuls beaufschlagt wird, wobei die aufeinanderfolgenden Stromimpulse immer die gleiche Polarität aufweisen.

**Patentansprüche**

1. Vorrichtung zum Dämpfen der Schwingung eines schwingfähig gelagerten Aggregats (10), mit einem an das Aggregat (10) angekoppelten, passiven Schwingungstilger (15), der von einem in Gegenphase zum Aggregat (10) schwingenden Feder-Masse-System (17, 16) gebildet ist, **gekennzeichnet durch** eine auf die Masse (16) des Schwingungstilgers (15) in Schwingungsrichtung wirkende Antriebsvorrichtung (18), die phasenrichtig so gesteuert ist, daß die Schwingungsamplitude des Schwingungstilgers (15) um einen zur vollständigen Kompensierung der Schwingungsamplitude des Aggregats (10) erforderlichen Betrag erhöht wird.

2. Vorrichtung nach Anspruch 1, **dadurch gekennzeichnet, daß** die Antriebsvorrichtung (18) nur in einer halben Schwingungsperiode der Schwingung des Schwingungstilgers (15) wirksam ist.

3. Vorrichtung nach Anspruch 1 oder 2, **dadurch gekennzeichnet, daß** die Antriebsvorrichtung (18) einen elektromagnetischen Antrieb (19) und eine Steuereinheit (20) zum Steuern des Antriebs (19) aufweist.

4. Vorrichtung nach Anspruch 3, **dadurch gekennzeichnet, daß** der elektromagnetische Antrieb (19) eine elektrischen Spule (21) aufweist und die Steuereinheit (20) die elektrische Spule (21) mit Stromimpulsen gleicher Polarität phasenrichtig beaufschlagt.

5. Vorrichtung nach Anspruch 4, **dadurch gekennzeichnet, daß** die elektrische Spule (21) zwischen der Masse (16) des Schwingungstilgers (15) und dem Aggregat (10) angeordnet ist und daß auf mindestens einer der einander zugekehrten Oberflächen von Aggregat (10) und Masse (16) ferromagnetisches Material vorhanden ist.

6. Vorrichtung nach Anspruch 4, **dadurch gekennzeichnet, daß** die Masse (16) des Schwingungstilgers (15) mit einem Eisenkern (22) starr verbunden ist, der in die hohlzylindrisch ausgebildete Spule (21) eintaucht.

7. Vorrichtung nach einem der Ansprüche 3 - 6, **dadurch gekennzeichnet, daß** zur Generierung der die elektrische Spule (21) beaufschlagenden Stromimpulse der Steuereinheit (20) ein mit der Schwingung des Aggregats (10) synchrones, elektrisches Referenzsignal zugeführt ist.

8. Vorrichtung nach Anspruch 7, **dadurch gekennzeichnet, daß** das Referenzsignal von einem Sensor aufgenommen wird.

9. Vorrichtung nach Anspruch 7, **dadurch gekennzeichnet, daß** das Referenzsignal von einer die Schwingung des Aggregats (10) angeregten, elektrischen Anregungsspannung abgeleitet ist.

10. Vorrichtung nach Anspruch 9, **dadurch gekennzeichnet, daß** das Aggregat (10) ein Stirlingmotor mit netzgekoppelter Linearmaschine (11) ist und daß das Referenzsignal von der induzierten Spannung der Linearmaschine (11) abgenommen ist.

11. Vorrichtung nach einem der Ansprüche 7 - 10, **dadurch gekennzeichnet, daß** die Steuereinheit (20) einen Phasenschieber (23), und einen steuerbaren Verstärker (24) aufweist und daß im Stromkreis zwischen Steuereinheit (20) und Spule (21) ein während jeder halben Schwingungsperiode des phasenverschobenen, verstärkten Referenzsignals schließender, elektronischer Schalter, vorzugsweise eine Diode (25), angeordnet ist.

Fig.1

Fig.2